# EUROPÄISCHE PATENTSCHRIFT

(11) **EP 3 245 077 B1**
(45) Veröffentlichungstag und Bekanntmachung des Hinweises auf die Patenterteilung: **19.02.2020**
(21) Anmeldenummer: 15797278.7
(22) Anmeldetag: 11.11.2015
(51) Int. Cl.: B60C 11/03, B60C 11/11, B60C 11/12, B60C 11/13

(54) **FAHRZEUGLUFTREIFEN**
PNEUMATIC VEHICLE TYRE
PNEUMATIQUE DE VÉHICULE

(30) Priorität: 13.01.2015 DE 102015200360
(43) Veröffentlichungstag der Anmeldung: 22.11.2017
(73) Patentinhaber: Continental Reifen Deutschland GmbH, 30165 Hannover (DE)
(72) Erfinder: HEINHAUPT, Torsten, 29313 Hambühren (DE)
(74) Vertreter: Finger, Karsten
(86) Internationale Anmeldenummer: PCT/EP2015/076280
(87) Internationale Veröffentlichungsnummer: WO 2016/113014

(56) Entgegenhaltungen:
- EP-A1- 2 070 732
- EP-A1- 2 374 636
- JP-A- H09 300 915
- JP-A- H11 180 116

## Beschreibung

Die Erfindung betrifft einen Fahrzeugluftreifen mit einem Laufstreifen mit zumindest einer in Umfangsrichtung umlaufenden Blockreihe, welche durch zumindest eine Umfangsrille von weiteren Profilpositiven getrennt ist und deren Profilblöcke in Umfangsrichtung durch Querrillen voneinander getrennt sind, wobei die Profilblöcke jeweils eine radial äußere Blockoberfläche und Blockflanken aufweisen, welche die zumindest eine Umfangsrille und Querrillen begrenzen und unter einem Winkel von 0° bis 10° zur radialen Richtung verlaufen, wobei entlang von Blockflanken radial innerhalb der Blockoberfläche, Vorsprünge ausgebildet sind, welche eine parallel zur Blockoberfläche verlaufende Oberfläche mit einer sich parallel zur Blockflanke erstreckenden Kante aufweisen, von welcher eine den Vorsprung begrenzende Stirnfläche bis zum Rillengrund verläuft, welche unter einem bis zu 7° größeren Winkel zur radialen Richtung verläuft als die jeweilige Blockflanke.

Ein Fahrzeugluftreifen der eingangs genannten Art ist beispielsweise aus der EP 2 070 732 A1 bekannt. Bei einer Ausführungsform sind die an den Blockflanken ausgebildeten Vorsprünge jeweils durch eine parallel zur Blockoberfläche verlaufende Oberflächen und zwei zur radialen Richtung geneigte Stirnflächen begrenzt, wobei die radial äußere Stirnfläche bis zur Blockoberfläche verläuft. Ein derartiger Reifen soll ein gutes Wasserdrainagevermögen und gute Traktionseigenschaften aufweisen.

Aus der JP H11 180 116 A ist ein Fahrzeugluftreifen mit einem Profilblöcke aufweisenden Laufstreifen bekannt. Nahe der Randbereiche der Profilblöcke verlaufen schmale Nuten. An den Blockflanken der Profilblöcke sind stufenartige Vorsprünge ausgebildet, welche in Draufsicht die gesamte Blockflanke einnehmen. Durch die Nuten werden randseitige Blocksegmente gebildet, welche die Umfangsteifigkeit der Profilblöcke reduzieren und einen "Wisch-Effekt" bewirken sollen, sodass beim Fahren auf eisigen Fahrbahnen Schmelzwasser in die Nuten hineingewischt wird, wodurch die Griffeigenschaften verbessert werden sollen.

Die JP H09 300 915 A offenbart einen Fahrzeugluftreifen mit einem Laufstreifen mit Profilblöcken, an deren Blockflanken ebenfalls sich in Draufsicht über die gesamte Blockflanke erstreckende, stufenartige Vorsprünge ausgebildet sind. Die Vorsprünge weisen, im Querschnitt betrachtet, in radialer Richtung verlaufende Stirnflächen und parallel zur Blockoberfläche verlaufende Oberflächen auf. Derartige Vorsprünge sollen die Traktionseigenschaften verbessern.

Ferner ist aus der EP 2 374 636 A1 ein Motorradreifen bekannt, welcher einen Laufstreifen mit Profilblöcken, an deren Blockflanken kleinvolumige weit abstehende Vorsprünge ausgebildet sind, aufweist.

Die Laufstreifen von Fahrzeugluftreifen können sich aus Profilblockreihen zusammensetzen oder in Kombination Profilblockreihen und bandartig umlaufende Profilpositive bzw. Profilbänder aufweisen. Fahrzeugluftreifen, die insbesondere für den Einsatz auf Light-Trucks, Pickups und dergleichen vorgesehen sind und vor allem für den Einsatz auf Schnee, Schneematsch, im Gelände, auf sonstigem matschigen Untergrund oder Gras geeignet sein sollen, weisen meist einen Laufstreifen mit einer ausgeprägten Blockstruktur auf. Solche Reifen sollen gute Handling-, Traktions- und Bremseigenschaften auf den erwähnten Untergründen aufweisen und gleichzeitig robust ausgeführt sein, um sie vor einem erhöhten oder vorzeitigen Verschleiß bzw. Beschädigungen zu bewahren.

Der Erfindung liegt die Aufgabe zu Grunde, einen Fahrzeugluftreifen der eingangs genannten Art, welcher für den erwähnten Einsatzzweck auf Light-Trucks, Pickups und dergleichen und insbesondere auf speziellen Untergründen, wie Schnee, Schneematsch, sonstigem Matsch und dergleichen geeignet ist, hinsichtlich seiner Handling-, Brems- und Traktionseigenschaften sowie seiner Lebensdauer zu verbessern.

Gelöst wird die gestellte Aufgabe erfindungsgemäß dadurch, dass die parallel zur Blockoberfläche verlaufende Oberfläche der Vorsprünge bis zur Blockflanke verläuft, wobei die sich parallel zur Blockflanke erstreckende Kante zur Blockflanke einen Abstand von 0,3 mm bis 1,0 mm aufweist.

Erfindungsgemäß ausgeführte Laufstreifen weisen daher Blöcke mit Blockflanken auf, an welchen entlang der Blockflanken ausgebildete, flache Vorsprünge vorgesehen sind. Entlang der Randkanten der Oberfläche der Vorsprünge werden zusätzliche "Traktionskanten" zur Verfügung gestellt, welche die Traktion des Laufstreifens auf weichen Untergründen, wie Schnee, Matsch, Gras, Sand und dergleichen verbessern. Darüber hinaus stabilisieren die Vorsprünge den jeweiligen Profilblock, sodass auch die Handling- und Bremseigenschaften günstig beeinflusst werden. Die Vorsprünge bieten ferner Schutz vor Beschädigungen bzw. vorzeitigem Verschließ der Profilblöcke durch in die Rillen eindringende scharfe Steine und dergleichen.

Gemäß einer bevorzugten Ausführungsform der Erfindung beträgt der Abstand der sich parallel zur Blockflanke erstreckenden Kante zur Blockflanke 0,4 mm bis 0,6 mm. Die Vorsprünge sind daher derart flach, dass sie das Wasserdrainagevermögen der Umfangs- bzw. Querrillen nicht beeinträchtigen.

Bevorzugter Weise verläuft die Oberfläche der Vorsprünge in einem Abstand von 1,5 mm bis 2,5 mm zur jeweiligen Blockoberfläche, um derart optimal positionierte Traktionskanten auf weichen Untergründen zur Verfügung zu stellen.

Bei einer weiteren bevorzugten Ausführungsform der Erfindung weisen die Vorsprünge in Richtung der Erstreckung der jeweiligen Querrille oder Umfangsrille eine Längserstreckung von 4 mm bis 20 mm auf. Bei Ausführungen mit kürzerer Längserstreckung können pro Blockflanke zwei oder mehr Vorsprünge ausgebildet werden. Besonders wirkungsvoll sind dabei solche Vorsprünge, die eine relativ große Erstreckung längs der betreffenden Rille aufweisen, wobei solche Vorsprünge bevorzugt an Blockflanken vorgesehen werden, die Querrillen begrenzen.

Für eine ausgewogene Stabilität der Profilpositive ist es ferner vorteilhaft, wenn einem Vorsprung an einer Blockflanke eines Profilblockes ein Vorsprung an der gegenüberliegenden Blockflanke eines in Umfangs- oder Querrichtung benachbarten Profilblockes gegenüberliegt.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
- Fig. 1: eine Draufsicht auf einige Profilblöcke im Laufstreifen eines Fahrzeugluftreifens und
- Fig. 2: eine Ansicht eines Profilblockes eines Laufstreifens eines Fahrzeugluftreifens.

Die Erfindung befasst sich mit der Ausgestaltung eines Laufstreifens für Fahrzeugluftreifen in Radialbauart, insbesondere für Reifen für Personenkraftwagen oder Light-Trucks, wie Pickups. Erfindungsgemäß ausgeführte Fahrzeugluftreifen sind vor allem für den Einsatz unter winterlichen Fahrbedingungen, wie Schnee, Schneematsch oder Eis, aber auch für den Einsatz auf Matsch, Gras, Sand und dergleichen vorgesehen und besonders gut geeignet.

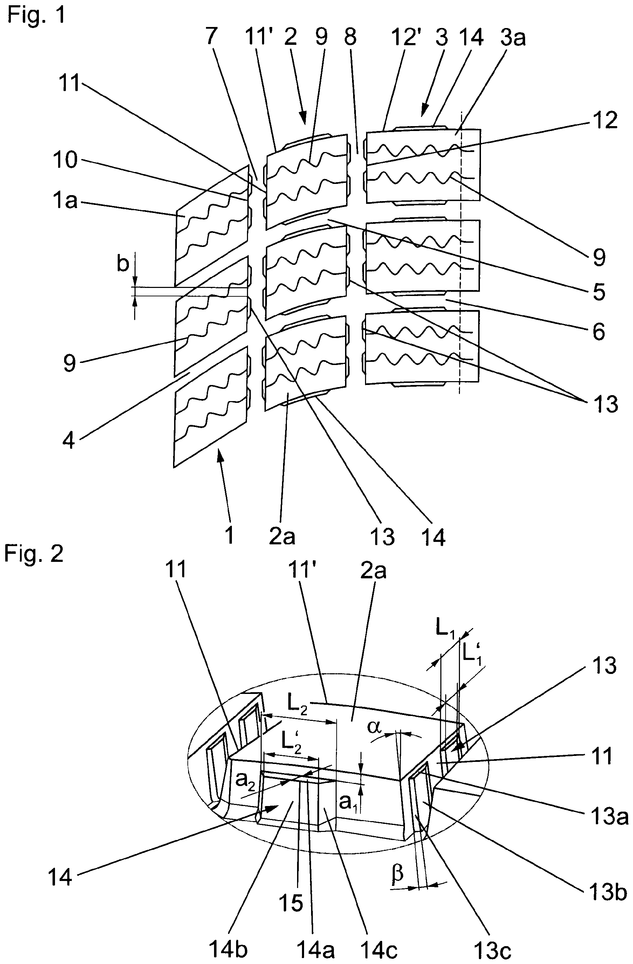

Fig. 1 zeigt schematisch drei in einer der Laufstreifenhälften umlaufende Blockreihen, eine zentrale Blockreihe 1, eine mittlere Blockreihe 2 und eine schulterseitige Blockreihe 3. In der Blockreihe 3 symbolisiert die gestrichelte Linie den seitlichen Rand der Bodenaufstandsfläche des Laufstreifens. Jede Blockreihe 1, 2 und 3 setzt sich aus in Umfangsrichtung aneinandergereihten Profilblöcken 1a, 2a und 3a zusammen, die innerhalb jeder Blockreihe 1, 2, 3 voneinander durch Querrillen 4, 5 und 6 getrennt sind.

Unter Querrillen werden im Rahmen der Erfindung Rillen verstanden, welche eine Erstreckungsrichtung aufweisen, die um bis zu 45° von der axialen Richtung abweicht. Bei der gezeigten Ausführung verlaufen die Querrillen 6 in den schulterseitigen Blockreihen 3 unter einem kleineren Winkel zur axialen Richtung als die in der zentralen Blockreihe 1 verlaufenden Querrillen 4. Die mittlere Blockreihe 2 ist von der zentralen Blockreihe 1 und von der schulterseitigen Blockreihe 3 durch je eine im Umfangsrichtung des Laufstreifens verlaufende Umfangsrille 7, 8 getrennt. Bei der gezeigten, vereinfachten Ausführung sind die Umfangsrillen 7, 8 in Umfangsrichtung gerade umlaufende Rillen, sie können jedoch auch zickzack- oder wellenförmig verlaufen und daher gegenüber der Umfangsrichtung insbesondere unter einem Winkel ≤ 45° geneigte Abschnitte aufweisen. In den Profilblöcken 1a, 2a und 3a ist jeweils eine Anzahl von Einschnitten 9 ausgebildet. Sämtliche Einschnitte 9 sind bei der gezeigten Ausführungsform in Draufsicht wellen- bzw. zickzackförmig verlaufende Einschnitte, welche die Profilblöcke 1a, 2a, 3a durchqueren und eine Breite von insbesondere 0,4 mm bis 0,6 mm aufweisen.

Die Umfangsrille 7 ist an der einen Seite durch Blockflanken 10 der Profilblöcke 1a und auf der anderen Seite durch Blockflanken 11 der Profilblöcke 2a begrenzt, die Umfangsrille 8 durch Blockflanken 11 der Profilblöcke 2a und Blockflanken 12 der Profilblöcke 3a. Blockflanken 11' der Profilblöcke 2a begrenzen die Querrillen 5, Blockflanken 12' der Profilblöcke 3a die Querrillen 6. Die Blockflanken 10, 11, 12, 11' und 12' schließen mit der radialen Richtung einen Winkel α von 0° bis zu 10° (Fig. 2), vorzugsweise von etwa 4°, ein, derart, dass die Breite der Umfangsrillen 7, 8 bzw. der Querrillen 5, 6 am jeweiligen Rillengrund etwas geringer ist als an der Laufstreifenoberfläche.

An den die Umfangsrillen 7, 8 begrenzenden Blockflanken 10, 11, 12 sind jeweils zwei Vorsprünge 13 ausgebildet, an den Blockflanken 11' und 12', welche die Querrillen 5, 6 begrenzen, jeweils ein Vorsprung 14. Die Anordnung der Vorsprünge 13, 14 ist bevorzugt derart, dass sie jeweils an gegenüberliegenden Blockflanken 10, 11, 12, 11', 12' einander paarweise gegenüberliegen. Die Vorsprünge 13, 14 verlaufen entlang der Blockflanken 10, 11, 12, 11', 12' beginnend in einem Abstand a₁ von 1,5 mm bis 2,5 mm, insbesondere 2 mm, von der jeweiligen Blockoberfläche bis zum jeweiligen Rillengrund. Die Vorsprünge 13, 14 weisen jeweils Oberflächen 13a, 14a mit einer in einem Abstand a2von 0,3 mm bis 1,0 mm, insbesondere 0,4 mm bis 0,6 mm, parallel zur Blockflanke 10, 11, 12, 11', 12' verlaufenden Kante 15 auf, von welcher eine unter einem Winkel β von bis zu 7°, insbesondere bis zu 5°, zur jeweiligen Blockflanke 10, 11, 12, 11', 12' verlaufende Stirnfläche 13b, 14b bis zum jeweiligen Rillengrund verläuft. Zwischen der Stirnfläche 13b, 14b und der jeweiligen Blockflanke 10, 11, 12, 11', 12' verlaufen in radialer Richtung schmale Seitenflächen 13c, 14c. Die Oberflächen 13a, 14a sind langgestreckte Vierecke, insbesondere im Wesentlichen gleichseitige Trapeze, und verlaufen parallel zu den Profilblockoberflächen. Die längere Trapezgrundlinie befindet sich an der jeweiligen Blockflanke 10, 11, 12, 11', 12', die kürzere Grundlinie der Trapezform verläuft parallel zur jeweiligen Blockflanke 10, 11, 12, 11', 12' und ist jene Kante 15, von welcher die Stirnfläche 13b, 14b ausgeht. Die größte Längserstreckung L₁ der Vorsprünge 13 - entlang der Erstreckung der jeweiligen Umfangsrille 7, 8 - beträgt 4 mm bis 10 mm, die Längserstreckung L₁' jener Kante 15, an welcher die Stirnfläche 13b anschließt, kann um bis zu 3 mm kürzer sein. Der gegenseitige Abstand b der paarweise an den Blockflanken 10, 11 und 12 angeordneten Vorsprünge 13 beträgt mindestens 2 mm, ihr Abstand zu den jeweiligen Blockecken mindestens 1 mm.

Die Vorsprünge 14 an den Blockflanken 11' und 12' weisen eine Längserstreckung L₂ entlang der Blockflanken 11', 12' auf, die insbesondere 10 mm bis 20 mm beträgt, die Längserstreckung L₂' an jener Kante 15, an welche die Stirnfläche 14b anschließt, kann um bis zu 3 mm kleiner als L₂ sein.

Die Begrenzungskanten der Oberflächen 13a, 14a wirken als "Traktionskanten" und tragen zu einer Verbesserung der Verzahnung des Laufstreifens mit weichem Untergrund, wie Schnee, Matsch, Sand und dergleichen bei. Die gegenüber der Neigung der Blockflanken 10, 11, 12, 11', 12' zur radialen Richtung größere Neigung der Stirnflächen 13b, 14b der Vorsprünge 13, 14 bewirkt eine besonders vorteilhafte Stabilisierung der Profilblöcke 1a, 2a, 3a durch die Vorsprünge 13, 14. Das Gummimaterial der Vorsprünge 13, 14 schützt ferner die Profilblöcke 1a, 2a 3a vor Einschnitten oder Beschädigungen, insbesondere durch scharfe Steine und dergleichen.

Die Erfindung ist auf die dargestellten und beschriebenen Ausführungsformen nicht beschränkt. So können beispielsweise die Vorsprünge gerundet ausgeführte Übergangsflächen zwischen den Stirnflächen und der jeweiligen Blockflanke aufweisen.

### Bezugsziffernliste

- 1,2, 3...............: Blockreihe
- 1a, 2a, 3a..........: Profilblock
- 4, 5, 6...............: Querrille
- 7, 8 ...................: Umfangsrille
- 9.......................: Einschnitt
- 10.....................: Blockflanke
- 11, 11'..............: Blockflanke
- 12, 12'..............: Blockflanke
- 13, 14...............: Vorsprung
- 13a, 14a...........: Oberfläche
- 13b, 14b...........: Stirnfläche
- 13c, 14c...........: Seitenfläche
- 15.....................: Kante
- a₁, a₂, b.............: Abstand
- L₁, L₁'..............: Längserstreckung
- L₂, L₂'..............: Längserstreckung
- α, β ..................: Winkel

## Patentansprüche

1. Fahrzeugluftreifen mit einem Laufstreifen mit zumindest einer in Umfangsrichtung umlaufenden Blockreihe (1, 2, 3), welche durch zumindest eine Umfangsrille (7, 8) von weiteren Profilpositiven getrennt ist und deren Profilblöcke (1a, 2a, 3a) in Umfangsrichtung durch Querrillen (4, 5, 6) voneinander getrennt sind, wobei die Profilblöcke (1a, 2a, 3a) jeweils eine radial äußere Blockoberfläche und Blockflanken (10, 11, 12, 11, 12') aufweisen, welche die zumindest eine Umfangsrille (7, 8) und die Querrillen (4, 5, 6) begrenzen und unter einem Winkel (α) von 0° bis 10° zur radialen Richtung verlaufen, wobei entlang von Blockflanken (10, 11, 12, 11', 12') radial innerhalb der Blockoberfläche, Vorsprünge (13, 14) ausgebildet sind, welche eine parallel zur Blockoberfläche verlaufende Oberfläche (13a, 14a) mit einer sich parallel zur Blockflanke (10, 11, 12, 11', 12') erstreckenden Kante (15) aufweisen, von welcher eine den Vorsprung (13, 14) begrenzende Stirnfläche (13b, 14b) bis zum Rillengrund verläuft, welche unter einem bis zu 7° größeren Winkel (β) zur radialen Richtung verläuft als die jeweilige Blockflanke (10, 11, 12, 11', 12'),
**dadurch gekennzeichnet,**
**dass** die parallel zur Blockoberfläche verlaufende Oberfläche (13a, 14a) der Vorsprünge (13, 14) bis zur Blockflanke (10, 11, 12, 11', 12') verläuft, wobei die sich parallel zur Blockflanke (10, 11, 12, 11', 12') erstreckende Kante (15) zur Blockflanke (10, 11, 12, 11', 12') einen Abstand (a₂) von 0,3 mm bis 1,0 mm aufweist.

2. Fahrzeugluftreifen nach Anspruch 1, **dadurch gekennzeichnet, dass** der Abstand (a₂) der Kante (15) zur Blockflanke (10, 11, 12, 11', 12') 0,4 mm bis 0,6 mm beträgt.

3. Fahrzeugluftreifen nach Anspruch 1 oder 2, **dadurch gekennzeichnet, dass** die Oberfläche (13a, 14a) der Vorsprünge (13, 14) in einem Abstand (a₁) von 1,5 mm bis 2,5 mm zur jeweiligen Blockoberfläche verläuft.

4. Fahrzeugluftreifen nach einem der Ansprüche 1 bis 3, **dadurch gekennzeichnet, dass** die Vorsprünge (13, 14) in Richtung der Erstreckung der jeweiligen Querrille (4, 5, 6) oder der jeweiligen Umfangsrille (7, 8) eine Längserstreckung (L₁, L₂) von 4 mm bis 20 mm aufweisen.

5. Fahrzeugluftreifen nach einem der Ansprüche 1 bis 4, **dadurch gekennzeichnet, dass** einem Vorsprung (13, 14) an einer Blockflanke (10, 11, 12, 11', 12') eines Profilblockes (1a, 2a, 3a) ein Vorsprung (13, 14) an der gegenüberliegenden Blockflanke (10, 11, 12, 11', 12') eines in Umfangs- oder Querrichtung benachbarten Profilblockes (1a, 2a, 3a) gegenüber liegt.

6. Fahrzeugluftreifen nach einem der Ansprüche 1 bis 5, **dadurch gekennzeichnet, dass** die Vorsprünge (13), welche an derselben Blockflanke (10, 11, 12) ausgebildet sind, paarweise angeordnet sind.

## Claims

1. Pneumatic vehicle tire having a tread with at least one row of blocks (1, 2, 3), which runs around in the circumferential direction, is separated from further profile positives by at least one circumferential groove (7, 8) and the profile blocks (1a, 2a, 3a) of which are separated from one another in the circumferential direction by transverse grooves (4, 5, 6), wherein the profile blocks (1a, 2a, 3a) in each case have a radially outer block surface and block flanks (10, 11, 12, 11', 12') which bound the at least one circumferential groove (7, 8) and the transverse grooves (4, 5, 6) and run at an angle (α) of 0° to 10° in relation to the radial direction,
wherein
projections (13, 14) are formed along block flanks (10, 11, 12, 11', 12'), radially within the block surface, which projections have a surface (13a, 14a) running parallel to the block surface with an edge (15) extending parallel to the block flank (10, 11, 12, 11', 12'), from which an end face (13b, 14b) bounding the projection (13, 14) runs as far as the base of the groove and which runs at an angle (β) in relation to the radial direction up to 7° greater than the respective block flank (10, 11, 12, 11', 12'), **characterized in that** the surface (13a, 14a) of the projections (13, 14) running parallel to the block surface runs as far as the block flank (10, 11, 12, 11', 12'), wherein the edge (15) extending parallel to the block flank (10, 11, 12, 11', 12') has a distance (a₂) from the block flank (10, 11, 12, 11' 12') of 0.3 mm to 1.0 mm.

2. Pneumatic vehicle tire according to Claim 1, **characterized in that** the distance (a₂) of the edge (15) from the block flank (10, 11, 12, 11', 12') is 0.4 mm to 0.6 mm.

3. Pneumatic vehicle tire according to Claim 1 or 2, **characterized in that** the surface (13a, 14a) of the projections (13, 14) runs at a distance (a₁) of 1.5 mm to 2.5 mm from the respective block surface.

4. Pneumatic vehicle tire according to one of Claims 1 to 3, **characterized in that** the projections (13, 14) have a longitudinal extent (L₁, L₂) of 4 mm to 20 mm in the direction of the extent of the respective transverse groove (4, 5, 6) or the respective circumferential groove (7, 8).

5. Pneumatic vehicle tire according to one of Claims 1 to 4, **characterized in that** there is opposite a projection (13, 14) on one block flank (10, 11, 12, 11', 12') of a profile block (1a, 2a, 3a) a projection (13, 14) on the opposite block flank (10, 11, 12, 11', 12') of a profile block (1a, 2a, 3a) that is adjacent in the circumferential or transverse direction.

6. Pneumatic vehicle tire according to one of Claims 1 to 5, **characterized in that** the projections (13) which are formed on the same block flank (10, 11, 12) are arranged in pairs.

## Revendications

1. Pneumatique de véhicule comprenant une bande de roulement pourvue d'au moins une rangée de blocs (1, 2, 3) qui s'étendent dans la direction circonférentielle, qui est séparée des autres profilés positifs par au moins une rainure circonférentielle (7, 8) et dont les blocs profilés (1a, 2a, 3a) sont séparés les uns des autres dans la direction circonférentielle par des rainures transversales (4, 5, 6), les blocs profilés (1a, 2a, 3a) comportant chacun une surface de bloc radialement extérieure et des flancs de bloc (10, 11, 12, 11', 12') qui délimitent l'au moins une rainure circonférentielle (7, 8) et les rainures transversales (4, 5, 6) et s'étendent selon un angle (α) de 0° à 10° par rapport à la direction radiale, des saillies (13, 14) étant formées le long de flancs de bloc (10, 11, 12, 11', 12') radialement à l'intérieur de la surface de bloc, lesquelles saillies comportent une surface (13a, 14a) qui s'étend parallèlement à la surface de bloc et qui est pourvue d'un bord (15) qui s'étend parallèlement au flanc de bloc (10, 11, 12, 11', 12') et duquel une face frontale (13, 14) délimitant la saillie (13b, 14b) s'étend jusqu'à la base de la rainure, laquelle surface frontale s'étend avec un plus grand angle (β) allant jusqu'à 7° par rapport à la direction radiale en comparaison avec le flanc de bloc respectif (10, 11, 12, 11', 12'),
**caractérisé en ce que**
la surface (13a, 14a) des saillies (13, 14), laquelle s'étend parallèlement à la surface de bloc, s'étend jusqu'au flanc de bloc (10, 11, 12, 11', 12'), le bord (15) qui s'étend parallèlement au flanc de bloc (10, 11, 12, 11', 12') étant situé à une distance (a₂) allant de 0,3 mm à 1,0 mm par rapport au flanc de bloc (10, 11, 12, 11', 12').

2. Pneumatique de véhicule selon la revendication 1, **caractérisé en ce que** la distance (a₂) du bord (15) au flanc de bloc (10, 11, 12, 11', 12') est de 0,4 mm à 0,6 mm.

3. Pneumatique de véhicule selon la revendication 1 ou 2, **caractérisé en ce que** la surface (13a, 14a) des saillies (13, 14) s'étend à une distance (a₁) de 1,5 mm à 2,5 mm de la surface de bloc respective.

4. Pneumatique de véhicule selon l'une des revendications 1 à 3, **caractérisé en ce que** les saillies (13, 14) comportent dans la direction de l'extension de la rainure transversale respective (4, 5, 6) ou de la rainure circonférentielle respective (7, 8) une extension longitudinale (L₁, L₂) de 4 mm à 20 mm.

5. Pneumatique de véhicule selon l'une des revendications 1 à 4, **caractérisé en ce qu'**à l'opposé d'une saillie (13, 14) sur un flanc de bloc (10, 11, 12, 11', 12') d'un bloc profilé (1a, 2a, 3a) se trouve une saillie (13 , 14) sur le flanc de bloc opposé (10, 11, 12, 11', 12') d'un bloc de profilé (1a, 2a, 3a) adjacent dans la direction circonférentielle ou transversale.

6. Pneumatique de véhicule selon l'une des revendications 1 à 5, **caractérisé en ce que** les saillies (13), qui sont formées sur le même flanc de bloc (10, 11, 12), sont disposées par paires.
